# FASCICULE DE BREVET EUROPEEN

(11) **EP 3 842 192 B1**
(45) Date de publication et mention de la délivrance du brevet: **09.04.2025**
(21) Numéro de dépôt: 20216626.0
(22) Date de dépôt: 22.12.2020
(51) Int. Cl.: B25J 15/00

(54) **DISPOSITIF DE PRÉHENSION**
GREIFVORRICHTUNG
GRIPPING DEVICE

(30) Priorité: 23.12.2019 FR 1915486
(43) Date de publication de la demande: 30.06.2021
(73) Titulaire: FIVES CINETIC, 70400 Hericourt (FR)
(72) Inventeur: BURTEAUX, Damien, 70400 HERICOURT (FR)
(74) Mandataire: Novagraaf Group

(56) Documents cités:
- FR-A1- 3 014 858
- JP-A- H0 828 751
- US-A1- 2017 050 323
- US-B1- 6 371 717
- FIVES: "Conveying and sorting solutions for wood panels - Schmidt Group", 25 January 2019 (2019-01-25), XP054980746, Retrieved from the Internet <URL:https://www.youtube.com/watch?v=CrXRLliaomI> [retrieved on 20200804]

## Description

### Domaine technique de l'invention

L'invention concerne dispositif de préhension et de manutention. En particulier l'invention concerne un dispositif de préhension et de manutention de panneaux de bois aggloméré ou médium en bois destinés à servir dans la fabrication et l'assemblage de cuisines domestiques.

### Arrière-plan technique

Dans l'industrie du panneau de bois, notamment du panneau de bois destiné à la fabrication et à l'assemblage de meubles en bois, la cadence de production est importante.

La ligne de production comporte deux ateliers : un atelier de découpe et un atelier de finition. Dans l'atelier de découpe, les planches en bois de taille initiale standard sont coupées pour former les panneaux en bois de base pour la fabrication des meubles. Dans l'atelier de finition, les panneaux en bois sont revêtus d'une couche de finition (chants) afin de couvrir les tranches des panneaux de bois d'une part et leur conférer un certain aspect esthétique d'autre part.

Des problèmes techniques et les cadences de production asynchrones de l'atelier de découpe et de l'atelier de finition peuvent affecter le flux entre l'atelier de découpe et l'atelier de finition.

Pour éviter l'arrêt de la production et pour optimiser les rendements, la ligne de production comporte un stock tampon entre l'atelier de découpe et l'atelier de finition. Le stock tampon permet de décorréler l'atelier de découpe de l'atelier de finition.

Le stock tampon est constitués de panneaux en bois découpés. En fonctionnement normal, les panneaux de bois découpés provenant de l'atelier de découpe sont envoyés directement vers l'atelier de finition. Lorsque l'atelier de finition fonctionne à une cadence inférieure à celle de l'atelier de découpe, les panneaux de bois provenant de l'atelier de découpe (en surnombres) sont envoyés vers le stock tampon afin de constituer une réserve permettant de décorréler l'atelier de découpe et l'atelier de finition. Lorsque l'atelier de finition a une cadence de production supérieure à celle de l'atelier de découpe, des panneaux de bois sont prélevés dans le stock tampon et acheminés vers l'atelier de finition afin de ne pas ralentir ce dernier.

En raison des quantités importantes mobilisées d'une part et des grandes dimensions des panneaux en bois d'autre part, une surface sol importante est utilisée ce qui génère un surcoût significatif dont les industriels souhaiteraient s'affranchir. En effet, les panneaux en bois reposent sur leur surface la plus importante, pour une plus grande stabilité.

Les industriels souhaitent donc s'orienter vers une gestion en flux tendu et en minimisant les surfaces des stocks tampon. Afin d'atteindre cet objectif, un système de stockage comportant plusieurs compartiments, est utilisé pour ranger les panneaux en bois du stock tampon. Les compartiments peuvent accueillir plusieurs panneaux en bois empilés les uns sur les autres sur leur tranche et verticalement sans séparation. Chaque compartiment comporte des stabilisateurs latéraux permettant de maintenir les panneaux en bois en position verticale afin que l'empilement des panneaux soit stable.

Les dispositifs de préhension connus sont incompatibles avec l'utilisation d'un système de stockage à compartiment tel que précédemment décrit. Un dispositif de préhension selon le préambule de la revendication 1 est connu de la vidéo https://www.youtube.com/watch?v=CrXRLiaoml , ou du document US 6 371 717 B1.

Les dispositifs de préhension actuels comprennent des ventouses, et sont donc trop volumineux pour permettre la prise de plusieurs panneaux en même temps dans un compartiment exigu du système de stockage. En effet, l'action d'insérer ou de sortir des panneaux d'un compartiment nécessite qu'une partie du dispositif de préhension entre dans le compartiment.

Ainsi un premier objectif de l'invention est de proposer un dispositif de préhension qui soit compatible avec le système de stockage précédemment décrit.

Un deuxième objectif est de proposer un dispositif de préhension apte à saisir plusieurs panneaux en bois simultanément.

Un troisième objectif est de proposer un dispositif de préhension qui puisse permettre un maintien vertical des panneaux en bois les uns sur les autres.

Un quatrième objectif est de proposer un dispositif de préhension permettant de ranger verticalement les panneaux sans séparations entre ceux-ci.

Un cinquième objectif est de pouvoir déplacer plusieurs panneaux en bois simultanément et sans mouvement relatif de ceux-ci par rapport au dispositif de préhension.

### Résumé de l'invention

A cet effet, il est proposé en premier lieu une installation comprenant un dispositif de préhension d'au moins un objet et un bras apte à déplacer ledit dispositif de préhension entre une position horizontale et une position verticale et/ou inversement dans lequel, le dispositif de préhension comprend :
- un support comportant une première extrémité et une seconde extrémité opposée à la première extrémité,
- une pluralité de pinces distinctes les unes des autres, montées sur le support entre la première extrémité et la seconde extrémité, chaque pince étant activable entre une position d'ouverture dans laquelle celle-ci est apte à dessaisir au moins un objet et une position de fermeture dans laquelle la pince est apte à saisir au moins un objet,
- un pion de butée jouxtant au moins une pince, le pion de butée étant apte à coopérer avec un objet saisi par ladite pince de sorte à bloquer une rotation dudit objet lorsque ledit dispositif est déplacé par le bras dans une quelconque position entre la position horizontale et la position verticale et inversement,
- au moins un capteur de détection apte à détecter la présence d'au moins un objet , ledit capteur de détection étant agencé entre un pion de butée et une pince.

Une telle installation permet avantageusement de ranger plusieurs panneaux en bois dans un compartiment d'un système de stockage de sorte que les panneaux en bois sont empilés les uns sur les autres sur leur tranche respective et donc sans séparation entre lesdits panneaux.

Diverses caractéristiques supplémentaires peuvent être prévues seules ou en combinaison :
- chaque pince comprend deux mords ayant une face de contact avec l'objet à saisir ou dessaisir, les faces de contact définissant un plan de rotation, ledit objet étant susceptible d'effectuer une rotation dans le plan de rotation, sous l'effet de son poids lorsque le dispositif de préhension n'est plus en position horizontale ;
- le pion de butée comporte une tige s'étendant selon une direction d'extension sensiblement perpendiculaire à un plan de support définit par une face de support sensiblement plane sur laquelle sont agencées les pinces ;
- le dispositif comporte une pince d'extrémité inférieure identique aux autres pinces, ladite pince d'extrémité inférieure étant celle située le plus bas lorsque le dispositif est en position verticale, le dispositif de préhension comprend un pion de butée inférieur jouxtant la pince d'extrémité inférieure, ledit pion de butée inférieur étant agencé en dessous de la pince d'extrémité inférieure lorsque le dispositif de préhension est en position verticale ;
- le dispositif de préhension comprend plusieurs capteurs de détection de pièce et/ou plusieurs pions de butée ;
- le dispositif de préhension comporte plusieurs paires de pinces, chaque paire de pinces étant composée de deux pinces adjacentes, un pion de butée et/ou un capteur de détection est agencé entre certaines paires de pinces et aucun pion de butée et/ou capteur de détection n'est agencé entre d'autres paires de pinces ;
- aucun pion de butée et aucun capteur de détection n'est agencé entre les pinces des cinq premières pinces en partant de la première extrémité
- un pion de butée et un capteur de détection sont agencés entre les pinces à partir de la sixième pince en partant de la première extrémité
- une première distance séparant deux pinces adjacentes dans plusieurs paires de pinces, et une deuxième distance séparant deux pinces adjacentes dans plusieurs autres paires de pinces est supérieure à la première distance ;
- une distance séparant deux pinces adjacentes dans les cinq premières pinces en partant de la première extrémité est inférieure à une distance séparant deux pinces adjacentes à partir de la sixième pince en partant de la première extrémité ;
- l'au moins un pion de butée comporte une extrémité souple comportant un matériau souple et destinée à venir au contact de l'objet ;
- les pinces sont sensiblement alignées entre la première extrémité et la seconde extrémité ;
- le support comprend un système de connexion au bras, le système de connexion étant situé à une première distance de la première extrémité et à une deuxième distance de la seconde extrémité, la première distance étant inférieure à la deuxième, distance ;

Il est proposé en deuxième lieu une utilisation d'une installation telle que précédemment revendiquée pour saisir, dessaisir et manutentionner des panneaux en bois destinés à l'assemblage de cuisines domestiques.

Diverses caractéristiques supplémentaires peuvent être prévues seules ou en combinaison :
- chaque pince comprend deux mords ayant une face de contact avec l'objet à saisir ou dessaisir, les faces de contact définissant un plan de rotation, ledit objet étant susceptible d'effectuer une rotation dans le plan de rotation, sous l'effet de son poids lorsque le dispositif de préhension n'est plus en position horizontale ;
- plusieurs panneaux sont saisis en même temps par le dispositif de préhension et que le panneau se situant le plus bas présente les dimensions les plus grandes ;
- les panneaux en bois sont rangés dans un compartiment d'un système de stockage en position verticale de sorte que les panneaux reposent les uns sur les autres et sur leur tranche ;
- le dispositif de préhension saisi des panneaux en bois de manière sélective lorsque ceux-ci sont rangés dans le compartiment, de sorte à ne venir saisir qu'un panneau situé le plus haut ou plusieurs panneaux adjacents situés le plus haut.

### Brève description des figures

D'autres caractéristiques et avantages de l'invention apparaitront au cours de la lecture de la description détaillée qui va suivre pour la compréhension de laquelle on se reportera aux dessins annexés dans lesquels :
la figure 1 est une vue en perspective d'une installation selon l'invention ;

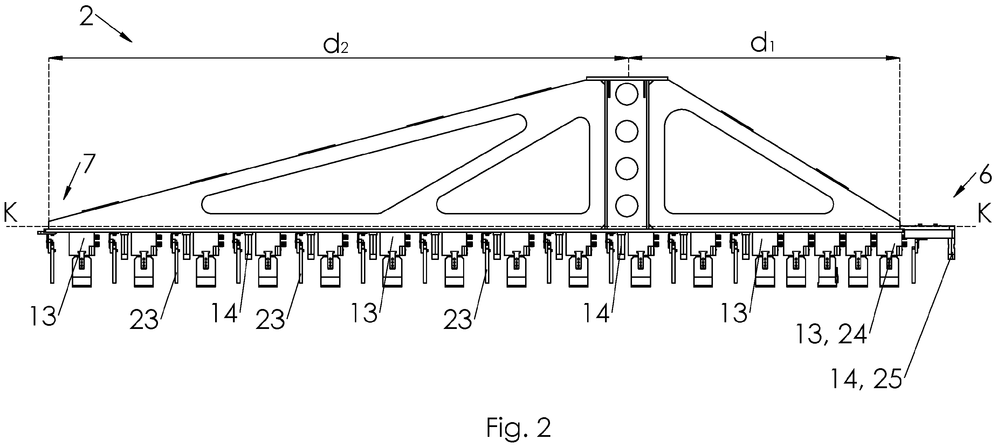

la figure 2 est une vue de côté d'un dispositif de préhension de l'installation de la figure 1;

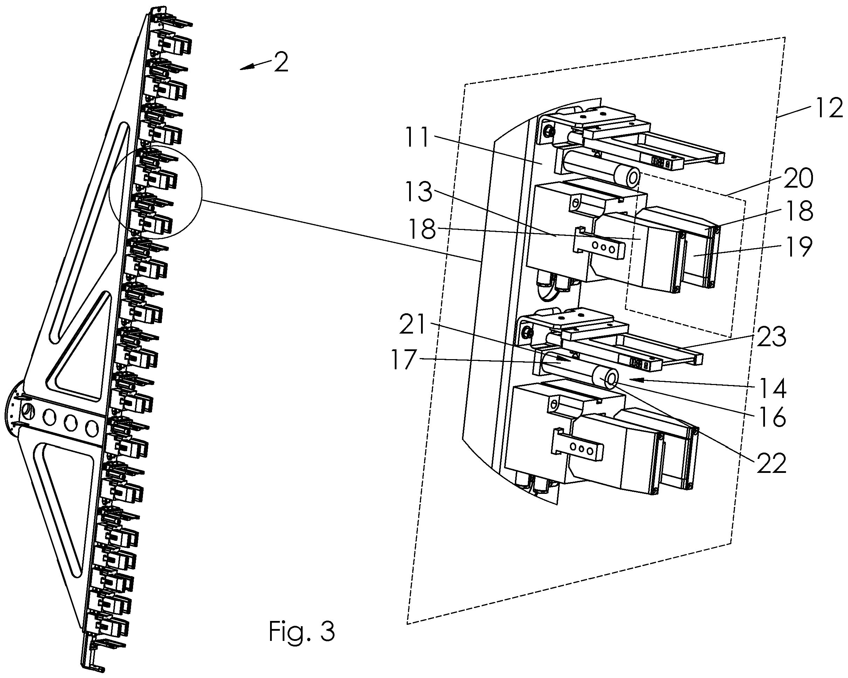

la figure 3 est une autre vue en perspective du dispositif de préhension de l'installation de la figure 1 avec une vue en détail ;

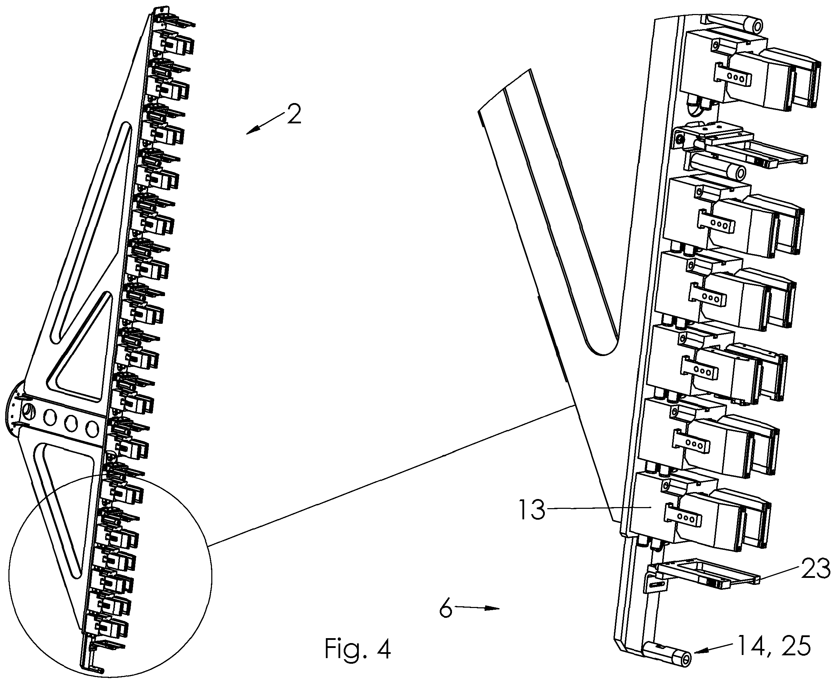

la figure 4 est une autre vue en perspective du dispositif de préhension de l'installation de la figure 1 avec une vue en détail d'une première extrémité ;
la figure 5 est une vue en perspective de l'installation saisissant un panneau en bois ;
la figure 6 est une vue en perspective de l'installation saisissant plusieurs panneaux en bois ;
la figure 7 est une vue en perspective de l'installation saisissant plusieurs panneaux de bois en position sensiblement horizontale ;
la figure 8 est une vue en perspective de l'installation saisissant plusieurs panneaux de bois en position sensiblement verticale ;
la figure 9 est une vue en perspective de l'installation saisissant plusieurs panneaux de bois et les rangeant dans un système de stockage en position verticale.

### Description détaillée de l'invention

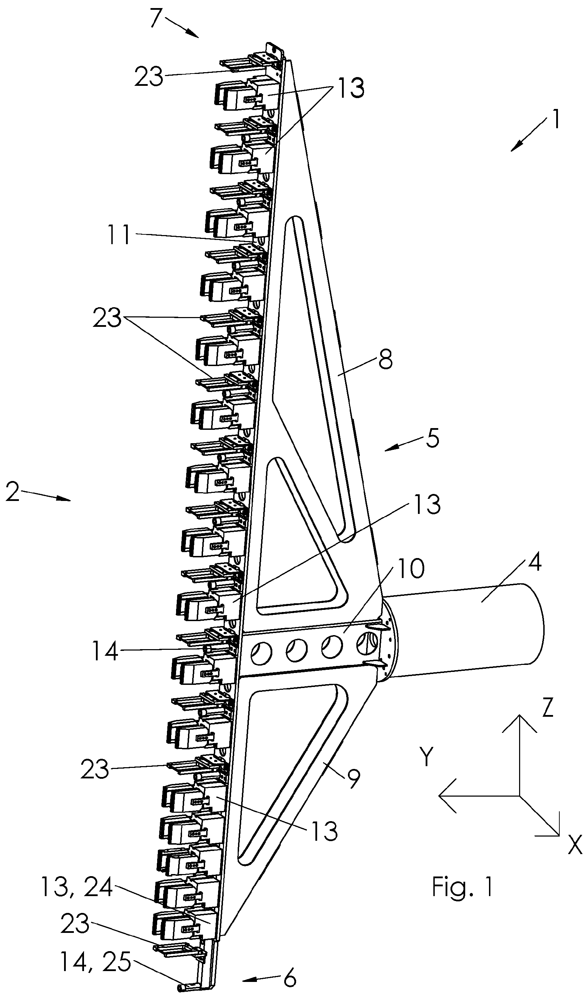

Sur la figure 1 est représenté une installation 1 comprenant un dispositif 2 de préhension et de manutention de panneaux 3 de bois et un bras 4 apte à déplacer le dispositif 2 de préhension. Le bras 4 est apte à déplacer le dispositif 2 de préhension entre une position horizontale et une position verticale ou inversement en référence à la gravité terrestre.

Il est défini, de manière non limitative et en référence à la gravité terrestre, un trièdre comprenant :
- un axe X horizontale,
- un axe transversal Y perpendiculaire à l'axe X et définissant ensemble avec l'axe Y un plan XY,
- un axe vertical Z perpendiculaire aux axes X et Y et définissant respectivement avec ces axes, un plan XZ et un plan YZ. L'axe Z est confondu avec la gravité terrestre.

Le dispositif 2 comprend un support 5 qui s'étend longitudinalement d'une première extrémité 6 à une seconde extrémité 7 opposée à la première extrémité 6. Dans ce qui suit, il est considéré que le dispositif 2 est en position verticale ou en position horizontale lorsqu'un axe K longitudinal passant sensiblement par les première et seconde extrémités 6, 7 est respectivement sensiblement parallèle à l'axe Z ou l'axe X et Y.

Le support 5 comporte une partie supérieure 8 et une partie inférieure 9 reliées par un système 10 de connexion au bras 4. La partie 8 supérieure et la partie 9 inférieure présentent une forme générale de triangle rectangle. La partie 8 supérieure, la partie 9 inférieure et le système 10 de connexion définissent une face 11 de support sensiblement plane. La face 11 de support définit un plan 12 de support.

Le dispositif 2 comprend plusieurs pinces 13 distinctes. Les pinces 13 sont activables de manière indépendante les unes des autres. Dans le mode de réalisation représenté sur les dessins, le dispositif 2 comporte seize pinces 13 distinctes. Les pinces 13 sont montées sur le support 5 et plus précisément sur la face 11 de support. Les pinces 13 sont sensiblement alignées de la première extrémité 6 à la seconde extrémité 7 du support 5.

Les pinces 13 sont activables entre une position d'ouverture dans laquelle elles sont aptes à dessaisir un panneau 3 en bois et une position de fermeture dans laquelle elles sont aptes à saisir au moins un panneau 3 en bois. Sur les dessins, les pinces 13 sont représentées en position de fermeture.

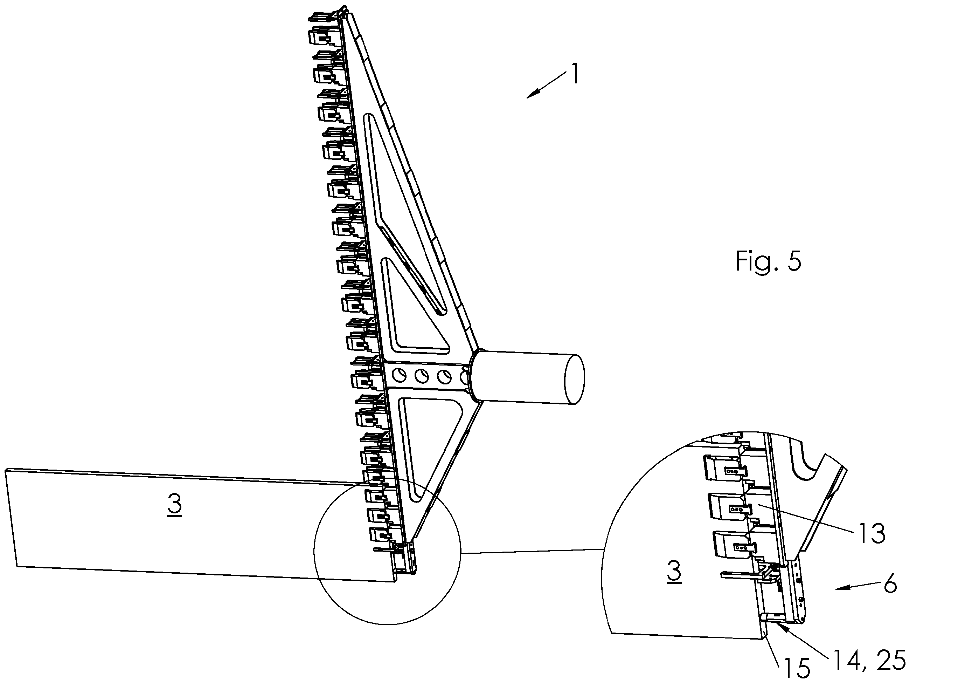

Selon l'invention, le dispositif 2 de préhension comprend un pion 14 de butée jouxtant au moins une pince 13. Initialement, le bras 4 est en position horizontale pour récupérer des panneaux 3 en bois. Lorsque le bras 4 positionne le dispositif 2 de préhension en position verticale, au cours de ce mouvement, les panneaux 3 en bois d'autant plus lorsqu'ils sont de grande dimension, peuvent glisser des pinces 13 et donc échapper au dispositif 2 de préhension. Le pion 14 de butée, positionné de sorte à être adjacent à une pince 13 donnée permet de venir bloquer la rotation du panneau 3 en bois ce qui permet de maintenir le panneau 3 en bois dans les pinces 13. Le panneau 3 en bois est un profilé, en général de forme rectangulaire, qui comprend plusieurs flancs, ci-après appelés tranches 15. La tranche 15 faisant face à la face 11 de support du dispositif 2 de préhension est celle qui vient buter sur le pion 14 de butée, ainsi qu'on peut le voir sur la figure 5. Il est à noter que le contact entre la tranche 15 du panneau 3 en bois et le pion 14 de butée ne se fait qu'au niveau d'une extrémité 16 distale et non sur une face 17 périphérique du pion 14 de butée.

Chaque pince 13 comporte deux mords 18 ayant une face 19 de contact destinée à venir en contact avec le panneau 3 en bois. Les faces 19 de contact s'étendent dans un plan, ci-après dénommé plan 20 de rotation. Les panneaux 3 en bois, sous l'effet de leur poids, sont susceptibles d'effectuer une rotation sensiblement inscrite dans le plan 20 de rotation.

Le pion 14 de butée comporte une tige 21 munie d'une extrémité 22 souple. La tige 21 s'étendant selon une direction d'extension sensiblement perpendiculaire au plan 12 de support. La longueur du pion 14 de butée est telle qu'elle permet à la tranche 15 de buter sur l'extrémité 22 souple tout en s'assurant que ladite tranche 15 est sensiblement parallèle à la face 11 de support.

Avantageusement, le dispositif 2 de préhension comporte une série de capteurs 23 destinés à détecter la présence des panneaux 3 en bois. Dans le mode de réalisation représenté sur les dessins, le dispositif 2 de préhension comprend treize capteurs 23. Les capteurs 23 sont de type optique. Plus précisément, les capteurs 23 sont de type à barrage optique. Ce type de capteur présente l'avantage de ne pas être induit en erreur par le réfléchissement induit par la surface des panneaux en bois.

Avantageusement, chaque capteur 23 est positionné entre un pion 14 de butée et une pince 13. Un tel agencement permet de détecter le pivotement éventuel d'un panneau en bois.

Le dispositif 2 de préhension comporte une pince 24 d'extrémité inférieure. La pince 24 d'extrémité inférieure est structurellement identique aux autres pinces 13. La pince 24 d'extrémité inférieure est celle située le plus bas lorsque le dispositif 2 est en position verticale. Avantageusement le dispositif 2 de préhension comprend un pion 14 de butée inférieure jouxtant la pince 24 d'extrémité inférieure et positionné en dessous de ladite pince 24 d'extrémité inférieure lorsque le dispositif 2 est en position verticale.

En partant de la première extrémité 6 vers la seconde extrémité 7, le dispositif 2 de préhension comprend un pion 25 de butée inférieure suivi d'un capteur 23. Il s'ensuit cinq pinces 13 successives puis un pion 14 de butée et un capteur 23. Ensuite, est agencée une série de onze pinces 13 séparées entre elles par un pion 14 de butée et un capteur 23. La seizième pince 13, située à la seconde extrémité 7 est bordée du côté extérieur, c'est-à-dire du côté opposé à la quinzième pince 13, par un capteur 23. Ce capteur 23 permet de détecter la présence d'un panneau situé à cette extrémité du dispositif 2 de préhension.

Ainsi qu'on peut le voir sur les dessins, la distance entre les pinces 13 n'est pas identique selon que l'on se déplace le long du dispositif 2 de préhension depuis la première extrémité 6 jusqu'à la seconde extrémité 7. La distance séparant deux pinces 13 adjacentes, dans les cinq premières pinces 13 en partant de la première extrémité 6, est inférieure à la distance séparant deux pinces 13 adjacentes à partir de la sixième pince 13. Ceci permet avantageusement une prise plus solide du panneau 3 situé le plus bas, c'est-à-dire celui en contact du pion de butée inférieur, et ainsi d'offrir une assise plus solide aux panneaux situés plus haut. La distance séparant deux pinces 13 adjacentes dans les cinq premières pinces 13 est sensiblement constante et la distance séparant deux pinces 13 adjacentes à partir de la sixième pince 13 est également sensiblement constante. La distance entre deux pinces 13 adjacentes est mesurée selon l'axe longitudinal.

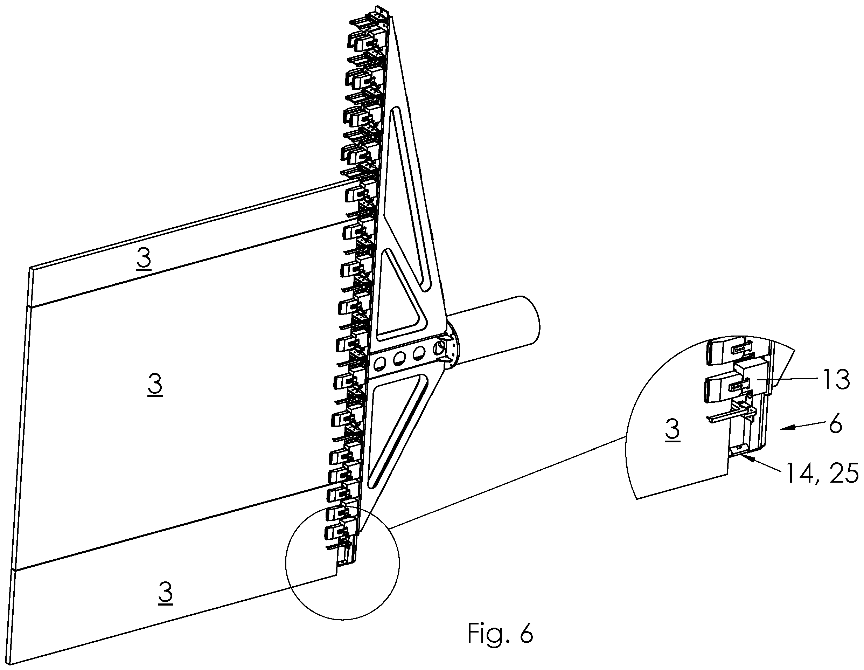

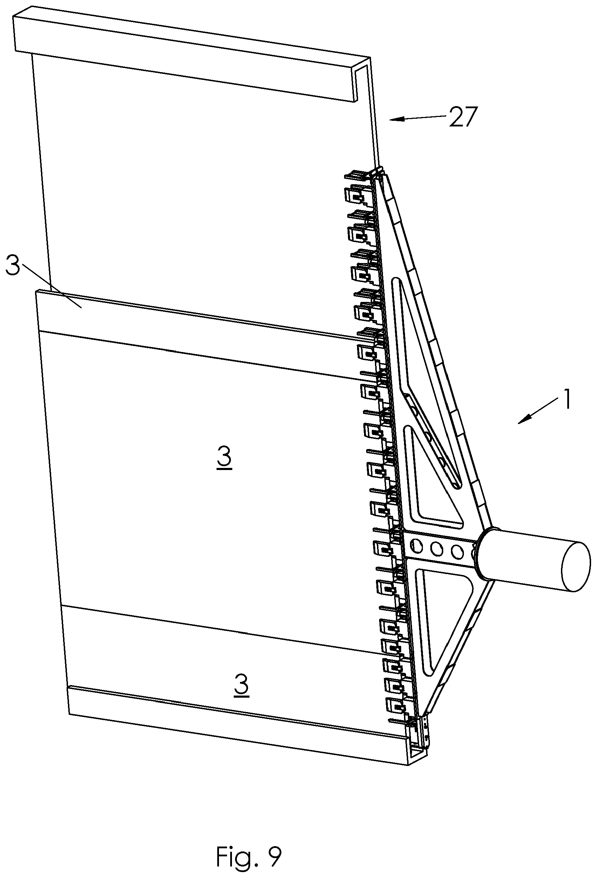

Ainsi qu'illustré sur les dessins, une distance d₁ séparant le système 10 de connexion du bras 4 à la première extrémité 6 est inférieur à une distance d₂ séparant le système 10 de connexion à la seconde extrémité 7. Les distance d₁, d₂ sont mesurées selon l'axe longitudinal. Lorsque le dispositif de préhension est utilisé, il est fréquent que celui-ci ne soit pas rempli de panneau comme on peut le voir sur les figures 6 à 9. L'agencement qui vient d'être décrit permet de déplacer le centre de gravité, notamment lorsque le dispositif de préhension est en position verticale afin de fiabiliser l'installation. Ceci permet également d'augmenter le rayon d'action du dispositif de préhension en déportant les panneaux vers le haut.

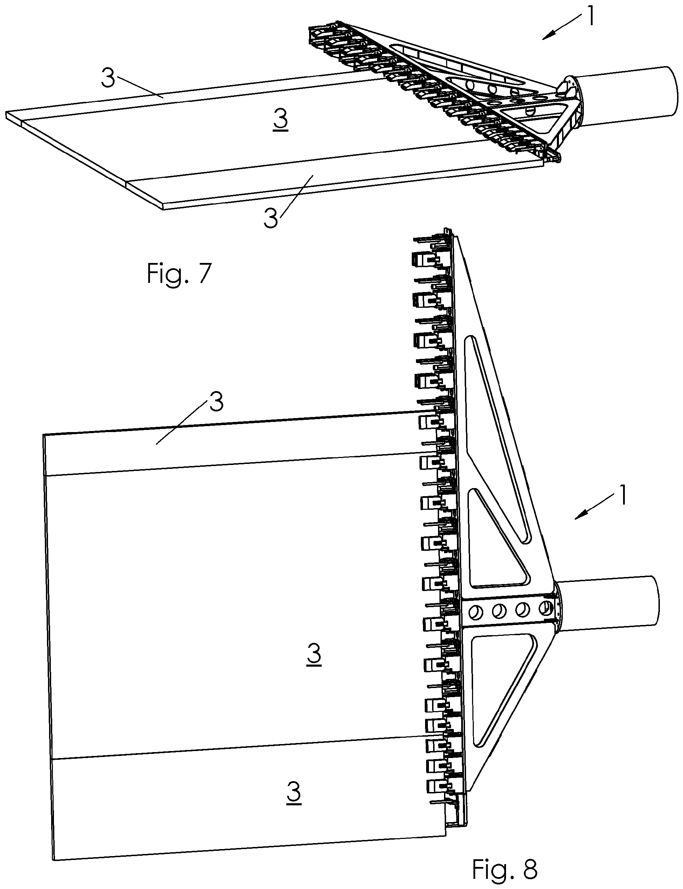

Dans ce qui suit, l'utilisation de l'installation 1 va être décrite en référence aux figures 7 à 9. Ainsi que précédemment évoqué, le dispositif 2 de préhension saisit des panneaux 3. Les panneaux 3 sont saisis de sorte qu'un panneau 26 inférieur, sur lequel vont reposer les autres panneaux 3, est celui qui présente les plus grandes dimensions. Le dispositif 2 de préhension positionne ensuite les panneaux 3 à la verticale comme on peut le voir sur la figure 8. Le dispositif 2 vient ensuite déposer les panneaux 3 dans un compartiment 27 d'un système de stockage. Le dispositif de préhension dessaisi les panneaux 3 et ceux-ci reposent les uns sur les autres sur leur tranche 15. Dans le compartiment 27, les panneaux 3 sont maintenus verticales par des stabilisateurs, non représentés sur les dessins. Ils se présentent sous la forme de brossent et tapissent des parois latérales 28 intérieures des compartiments. Pour venir retirer des panneaux du compartiment 27, le dispositif de préhension peut saisir toute la rangée ou bien ne saisir que qu'un ou des panneaux 3 en bois situés le plus haut. Par exemple, si seuls deux panneaux supérieurs doivent être utilisés, le dispositif de préhension peut saisir les deux panneaux adjacents situés le plus haut dans le compartiment 27.

L'installation 1 qui vient être décrite est avantageusement compatible avec les systèmes de stockage à compartiment où les panneaux sont stockés verticalement et reposent les uns sur les autres.

Un autre avantage est que l'installation est apte à saisir plusieurs panneaux en bois de taille différentes.

Un autre avantage est que l'installation permet de déposer les panneaux de bois de sorte qu'ils soient rangés verticalement.

Un autre avantage est que l'installation permet de ranger verticalement les panneaux sans séparations entre ceux-ci.

Un autre avantage de l'installation est qu'il n'y a quasi aucun risque de rotation intempestive des panneaux en bois.

## Revendications

1. Installation (1) comprenant un dispositif (2) de préhension d'au moins un objet (3) et un bras (4) apte à déplacer ledit dispositif (2) de préhension entre une position horizontale et une position verticale et/ou inversement, le dispositif (2) de préhension comprenant :
- un support (5) comportant une première extrémité (6) et une seconde extrémité (7) opposée à la première extrémité (6),
- une pluralité de pinces (13) distinctes les unes des autres, montées sur le support (5) entre la première extrémité (6) et la seconde extrémité (7), chaque pince (13) étant activable entre une position d'ouverture dans laquelle celle-ci est apte à dessaisir au moins un objet (3) et une position de fermeture dans laquelle la pince (13) est apte à saisir au moins un objet (3),
- un pion (14) de butée jouxtant au moins une pince (13), le pion (14) de butée étant apte à coopérer avec un objet (3) saisi par ladite pince (13) de sorte à bloquer une rotation dudit objet (3) lorsque ledit dispositif (2) est déplacé par le bras (4) dans une quelconque position entre la position horizontale et la position verticale et inversement,
**caractérisée en ce que** le dispositif (2) comprend au moins un capteur (23) de détection apte à détecter la présence d'au moins un objet (3), ledit capteur de détection étant agencé entre un pion de butée et une pince.

2. Installation (1) selon la revendication 1, dans laquelle chaque pince (13) comprend deux mords (18) ayant une face (19) de contact avec l'objet (3) à saisir ou dessaisir, les faces (19) de contact définissant un plan (20) de rotation, ledit objet (3) étant susceptible d'effectuer une rotation dans le plan (20) de rotation, sous l'effet de son poids lorsque le dispositif (2) de préhension n'est plus en position horizontale.

3. Installation (1) selon l'une des revendications 1 ou 2, dans laquelle le dispositif (2) comporte une pince (24) d'extrémité inférieure identique aux autres pinces (13), ladite pince (24) d'extrémité inférieure étant celle située le plus bas lorsque le dispositif (2) est en position verticale, et dans laquelle le dispositif (2) de préhension comprend un pion (25) de butée inférieur jouxtant la pince (24) d'extrémité inférieure, ledit pion (25) de butée inférieur étant agencé en dessous de la pince (24) d'extrémité inférieure lorsque le dispositif (2) de préhension est en position verticale.

4. Installation (1) l'une quelconque des revendications précédentes, dans laquelle le dispositif (2) comprend plusieurs capteurs (23) de détection de pièce et/ou plusieurs pions (14) de butée.

5. Installation (1) selon la revendication 4, dans laquelle le dispositif (2) comporte plusieurs paires de pinces (13), chaque paire de pinces (13) étant composée de deux pinces (13) adjacentes et dans laquelle, un pion (14) de butée et/ou un capteur (23) de détection est agencé entre certaines paires de pinces (13) et aucun pion (14) de butée et/ou capteur (23) de détection n'est agencé entre d'autres paires de pinces (13).

6. Installation (1) selon l'une quelconque des revendications 4 ou 5, dans laquelle aucun pion (14) de butée et aucun capteur (23) de détection n'est agencé entre les pinces (13) des cinq premières pinces (13) en partant de la première extrémité (6).

7. Installation (1) selon l'une quelconque des revendications 5 ou 6, dans laquelle un pion (14) de butée et un capteur (23) de détection sont agencés entre les pinces (13) à partir de la sixième pince (13) en partant de la première extrémité (6).

8. Installation (1) selon l'une quelconque des revendications 6 ou 7, dans laquelle une première distance séparant deux pinces (13) adjacentes dans plusieurs paires de pinces (13), et une deuxième distance séparant deux pinces (13) adjacentes dans plusieurs autres paires de pinces (13) est supérieure à la première distance.

9. Installation (1) selon la revendication 8, dans laquelle une distance séparant deux pinces (13) adjacentes dans les cinq premières pinces (13) en partant de la première extrémité (6) est inférieure à une distance séparant deux pinces (13) adjacentes à partir de la sixième pince (13) en partant de la première extrémité (6).

10. Installation (1) selon l'une quelconque des revendications précédentes, dans laquelle l'au moins un pion (14) de butée comporte une extrémité (22) souple comportant un matériau souple et destinée à venir au contact de l'objet (3).

11. Installation (1) selon l'une quelconque des revendications précédentes, dans laquelle le support (5) comprend un système (10) de connexion au bras (4), le système (10) de connexion étant situé à une distance (d₁) de la première extrémité (6) et à une distance (d₂) de la seconde extrémité (7), la distance (d₁) étant inférieure à la distance (d₂).

12. Utilisation d'une installation selon l'une quelconque des revendications précédentes pour saisir, dessaisir et manutentionner des panneaux (3) en bois destinés à l'assemblage de cuisines domestiques.

13. Utilisation selon la revendication 12, dans laquelle plusieurs panneaux (3) sont saisis en même temps par le dispositif (2) de préhension et que le panneau (3) se situant le plus bas présente les dimensions les plus grandes.

14. Utilisation selon la revendication 13, dans laquelle les panneaux (3) en bois sont rangés dans un compartiment (27) d'un système de stockage en position verticale de sorte que les panneaux reposent les uns sur les autres et sur leur tranche.

15. Utilisation selon la revendication 14, dans laquelle le dispositif de préhension saisi des panneaux (3) en bois de manière sélective lorsque ceux-ci sont rangés dans le compartiment (27), de sorte à ne venir saisir qu'un panneau situé le plus haut ou plusieurs panneaux adjacents situés le plus haut.

## Patentansprüche

1. Anlage (1), umfassend eine Vorrichtung (2) zum Greifen von mindestens einem Objekt (3) und einen Arm (4), der geeignet ist, die Greifvorrichtung (2) zwischen einer horizontalen Position und einer vertikalen Position und/oder umgekehrt zu bewegen, die Greifvorrichtung (2) umfassend:
- einen Träger (5), der ein erstes Ende (6) und ein zweites Ende (7) gegenüber dem ersten Ende (6) enthält,
- eine Vielzahl von voneinander getrennten Klemmen (13), die an dem Träger (5) zwischen dem ersten Ende (6) und dem zweiten Ende (7) montiert sind, wobei jede Klemme (13) zwischen einer Öffnungsposition, in der diese geeignet ist, mindestens ein Objekt (3) loszulassen, und einer Schließposition, in der die Klemme (13) geeignet ist, mindestens ein Objekt (3) zu ergreifen, betätigbar ist,
- einen Anschlagstift (14), der an mindestens eine Klemme (13) angrenzt, wobei der Anschlagstift (14) geeignet ist, mit einem Objekt (3), das durch die Klemme (13) ergriffen ist, zusammenzuwirken, um eine Rotation des Objekts (3) zu blockieren, wenn die Vorrichtung (2) durch den Arm (4) in eine beliebige Position zwischen der horizontalen Position und der vertikalen Position und umgekehrt bewegt wird,
**dadurch gekennzeichnet, dass** die Vorrichtung (2) mindestens einen Erfassungssensor (23) umfasst, der geeignet ist, das Vorhandensein von mindestens einem Objekt (3) zu erfassen, wobei der Erfassungssensor zwischen einem Anschlagstift und einer Klemme angeordnet ist.

2. Anlage (1) nach Anspruch 1, wobei jede Klemme (13) zwei Backen (18) umfasst, die eine Kontaktfläche (19) mit dem zu ergreifenden oder loszulassenden Objekt (3) vorweisen, wobei die Kontaktflächen (19) eine Rotationsebene (20) definieren, wobei das Objekt (3) imstande ist, eine Rotation in der Rotationsebene (20), unter der Wirkung seines Gewichts durchzuführen, wenn die Greifvorrichtung (2) nicht mehr in der horizontalen Position ist.

3. Anlage (1) nach einem der Ansprüche 1 oder 2, wobei die Vorrichtung (2) eine untere Endklemme (24) enthält, die mit den anderen Klemmen (13) identisch ist, wobei die untere Endklemme (24) diejenige ist, die am tiefsten gelegen ist, wenn die Vorrichtung (2) in der vertikalen Position ist, und wobei die Greifvorrichtung (2) einen unteren Anschlagstift (25) umfasst, der an die untere Endklemme (24) angrenzt, wobei der untere Anschlagstift (25) unterhalb der unteren Endklemme (24) angeordnet ist, wenn die Greifvorrichtung (2) in der vertikalen Position ist.

4. Anlage (1) einem der vorstehenden Ansprüche, wobei die Vorrichtung (2) mehrere Teileerfassungssensoren (23) und/oder mehrere Anschlagstifte (14) umfasst.

5. Anlage (1) nach Anspruch 4, wobei die Vorrichtung (2) mehrere Klemmenpaare (13) enthält, wobei jedes Klemmenpaar (13) aus zwei benachbarten Klemmen (13) gebildet ist und wobei ein Anschlagstift (14) und/oder ein Erfassungssensor (23) zwischen gewissen Klemmenpaaren (13) angeordnet ist, und wobei kein Anschlagstift (14) und/oder Erfassungssensor (23) zwischen anderen Klemmenpaaren (13) angeordnet ist.

6. Anlage (1) nach einem der Ansprüche 4 oder 5, wobei kein Anschlagstift (14) und kein Erfassungssensor (23) zwischen den Klemmen (13) der ersten fünf Klemmen (13), beginnend mit dem ersten Ende (6), angeordnet ist.

7. Anlage (1) nach einem der Ansprüche 5 oder 6, wobei ein Anschlagstift (14) und ein Erfassungssensor (23) zwischen den Klemmen (13) ab der sechsten Klemme (13), beginnend mit dem ersten Ende (6), angeordnet sind.

8. Anlage (1) nach einem der Ansprüche 6 oder 7, wobei ein erster Abstand, der zwei benachbarte Klemmen (13) in mehrere Klemmenpaare (13) trennt, und ein zweiter Abstand, der zwei benachbarte Klemmen (13) in mehrere andere Klemmenpaaren (13) trennt, größer als der erste Abstand ist.

9. Anlage (1) nach Anspruch 8, wobei ein Abstand, der zwei benachbarte Klemmen (13) in den fünf ersten Klemmen (13), beginnend mit dem ersten Ende (6), trennt, kleiner als ein Abstand ist, der zwei benachbarte Klemmen (13) ab der sechsten Klemme (13), beginnend mit dem ersten Ende (6), trennt.

10. Anlage (1) nach einem der vorstehenden Ansprüche, wobei der mindestens eine Anschlagstift (14) ein flexibles Ende (22) enthält, das ein flexibles Material enthält und dafür vorgesehen ist, mit dem Objekt (3) in Kontakt zu kommen.

11. Anlage (1) nach einem der vorstehenden Ansprüche, wobei der Träger (5) ein System (10) zum Verbinden mit dem Arm (4) umfasst, wobei das Verbindungssystem (10) in einem Abstand (d₁) von dem ersten Ende (6) und in einem Abstand (d₂) von dem zweiten Ende (7) gelegen ist, wobei der Abstand (d₁) kleiner als der Abstand (d₂) ist.

12. Verwendung einer Anlage nach einem der vorstehenden Ansprüche zum Greifen, Loslassen und Handhaben von Holzplatten (3), die für den Zusammenbau von Haushaltsküchen vorgesehen sind.

13. Verwendung nach Anspruch 12, wobei mehrere Platten (3) gleichzeitig durch die Greifvorrichtung (2) ergriffen werden und wobei die Platte (3), die am tiefsten gelegen ist, die größten Abmessungen aufweist.

14. Verwendung nach Anspruch 13, wobei die Holzplatten (3) in einem Fach (27) eines Lagersystems in vertikaler Position eingeordnet sind, sodass die Platten aufeinander und auf ihrer Schmalseite aufliegen.

15. Verwendung nach Anspruch 14, wobei die Greifvorrichtung Holzplatten (3) selektiv ergreift, wenn diese in dem Fach (27) eingeordnet sind, um nur eine am höchsten gelegene Platte oder mehrere benachbarte, am höchsten gelegene Platten zu ergreifen.

## Claims

1. Apparatus (1) comprising a device (2) for gripping at least one object (3) and an arm (4) capable of moving said gripping device (2) between a horizontal position and a vertical position and/or vice versa, the gripping device (2) comprising:
- a support (5) including a first end (6) and a second end (7) which is opposite the first end (6),
- a plurality of grippers (13) which are separate from one another, mounted on the support (5) between the first end (6) and the second end (7), each gripper (13) being activable between an open position in which it is capable of releasing at least one object (3) and a closed position in which the gripper (13) is capable of gripping at least one object (3),
- a stop pin (14) adjacent to at least one gripper (13), the stop pin (14) being capable of engaging with an object (3) gripped by said gripper (13) so as to block rotation of said object (3) when said device (2) is moved by the arm (4) into any position between the horizontal position and the vertical position and vice versa,
**characterized in that** the device (2) comprises at least one detection sensor (23) capable of detecting the presence of at least one object (3), said detection sensor being arranged between a stop pin and a gripper.

2. Apparatus (1) according to claim 1, wherein each gripper (13) comprises two jaws (18) having a face (19) in contact with the object (3) to be gripped or released, the contact faces (19) defining a plane (20) of rotation, said object (3) being rotatable in the plane (20) of rotation under the effect of its weight when the gripping device (2) is no longer in a horizontal position.

3. Apparatus (1) according to one of claims 1 or 2, wherein the device (2) comprises a lower end gripper (24) identical to the other grippers (13), said lower end gripper (24) being that which is located lowermost when the device (2) is in the vertical position, and wherein the gripping device (2) comprises a lower stop pin (25) adjacent to the lower end gripper (24), said lower stop pin (25) being arranged below the lower end gripper (24) when the gripping device (2) is in the vertical position.

4. Apparatus (1) any one of the preceding claims, wherein the device (2) comprises a plurality of part detection sensors (23) and/or a plurality of stop pins (14).

5. Apparatus (1) according to claim 4, wherein the device (2) comprises a plurality of pairs of grippers (13), each pair of grippers (13) consisting of two adjacent grippers (13), and wherein a stop pin (14) and/or a detection sensor (23) is arranged between certain pairs of grippers (13) and no stop pin (14) and/or detection sensor (23) is arranged between other pairs of grippers (13).

6. Apparatus (1) according to any one of claims 4 or 5, wherein no stop pin (14) and no detection sensor (23) is arranged between the grippers (13) of the first five grippers (13) starting from the first end (6).

7. Apparatus (1) according to any one of claims 5 or 6, wherein a stop pin (14) and a detection sensor (23) are arranged between the grippers (13) from the sixth gripper (13) starting from the first end (6).

8. Apparatus (1) according to any one of claims 6 or 7, wherein a first distance separating two adjacent grippers (13) in a plurality of pairs of grippers (13), and a second distance separating two adjacent grippers (13) in a plurality of other pairs of grippers (13) is greater than the first distance.

9. Apparatus (1) according to claim 8, wherein a distance separating two adjacent grippers (13) in the first five grippers (13) starting from the first end (6) is less than a distance separating two adjacent grippers (13) from the sixth gripper (13) starting from the first end (6).

10. Apparatus (1) according to any one of the preceding claims, wherein the at least one stop pin (14) comprises a flexible end (22) which comprises a flexible material and is intended to come into contact with the object (3).

11. Apparatus (1) according to any one of the preceding claims, wherein the support (5) comprises a system (10) for connecting to the arm (4), the connection system (10) being located at a distance (d₁)from the first end (6) and at a distance (d₂) from the second end (7), the distance (d₁) being less than the distance (d₂).

12. Use of an apparatus according to any one of the preceding claims for gripping, releasing and handling wooden panels (3) intended for the assembly of domestic kitchens.

13. Use according to claim 12, wherein a plurality of panels (3) are gripped simultaneously by the gripping device (2) and the lowest panel (3) has the largest dimensions.

14. Use according to claim 13, wherein the wooden panels (3) are stored in a compartment (27) of a storage system in a vertical position so that the panels rest on top of each other and on their edge surface.

15. Use according to claim 14, wherein the gripping device selectively grips wooden panels (3) when the panels are stored in the compartment (27), so as to grip only the uppermost panel or a plurality of the adjacent uppermost panels.
